# EUROPÄISCHE PATENTSCHRIFT

(11) **EP 1 522 381 B1**
(45) Veröffentlichungstag und Bekanntmachung des Hinweises auf die Patenterteilung: **03.01.2007**
(21) Anmeldenummer: 04023399.1
(22) Anmeldetag: 01.10.2004
(51) Int. Cl.: B23Q 3/155

(54) **Werkzeug-Handhabungseinrichtung**
Tool management system for machine tools
Système de gestion d'outils pour une machine-outil

(30) Priorität: 09.10.2003 DE 20315532 U
(43) Veröffentlichungstag der Anmeldung: 13.04.2005
(73) Patentinhaber: DECKEL MAHO Pfronten GmbH, 87459 Pfronten (DE)
(72) Erfinder: Kraft, Oliver, 87459 Pfronten (DE)
(74) Vertreter: Beetz & Partner

(56) Entgegenhaltungen:
- EP-A- 1 364 742
- WO-A-00/62979
- US-A- 4 546 533
- US-A- 5 068 958
- US-A- 5 919 120

## Beschreibung

Die Erfindung betrifft eine Werkzeug-Handhabungseinrichtung einer programmgesteuerten Fräs- und Bohrmaschine der im Oberbegriff des Patentanspruchs 1 angegebenen Gattung.

Derartige Handhabungssysteme werden in Verbindung mit Werkzeugmagazinen zur Bestückung von Werkzeugmaschinen, insbesondere von Fräs- und Bohrmaschinen sowie Bearbeitungszentren, mit unterschiedlichsten Werkzeugen eingesetzt. Obgleich das direkte Einwechseln von Werkzeugen in die jeweilige Arbeitsspindel der Werkzeugmaschine beispielsweise nach dem Pick-up-Prinzip mit Handhabungseinrichtungen möglich ist, besteht ihr bevorzugtes Anwendungsgebiet im Transport von Werkzeugen aus komplexen Werkzeugmagazinen und in einer Übergabe des jeweiligen Werkzeugs an einen Werkzeugwechsler - und umgekehrt. Bei den sog. Regalmagazinen befinden sich die Werkzeuge mit ihren meist als sogenannte Werkzeugkegel ausgebildeten Werkzeughaltern in übereinander mit Zwischenabstand angeordneten Regalen, wobei jedes Regal eine Vielzahl von Werkzeugaufnahmen enthält, in denen die jeweiligen Werkzeughalter eingesetzt sind. Entsprechend dem Arbeitsprogramm der Werkzeugmaschine wird ein für den nächstfolgenden Arbeitsvorgang ausgewähltes Werkzeug in seiner im Programm abgelegten Regalposition vom Handhabungssystem angefahren, dessen Greifer den jeweiligen Werkzeughalter erfaßt und in eine Übergabeposition transportiert, in welcher dieser Werkzeughalter an einen Werkzeugwechsler übergeben und ggf. das gebrauchte Werkzeug aus dem Werkzeugwechsler übernommen und in einen entsprechenden Freiplatz im Regalmagazin abgelegt wird. Für diese Operationen sind unterschiedliche Handhabungssysteme mit verschiedenartigen Greiferanordnungen bekannt. Bei allen diesen Systemen sind die Greifer jedoch nur für den einseitigen Zugriff eines Werkzeughalters ausgelegt, d.h. ihre Greiferklauen begrenzen eine seitliche Öffnung, durch die hindurch der Werkzeughalter in den Greifer eingeschoben und in Gegenrichtung aus dem Greifer herausgezogen wird. Durch diese nur einseitige Zugriffsmöglichkeit des Greifers komplizieren sich dessen Bewegungsabläufe bei Verwendung von komplexen Magazinen, beispielsweise von mehrreihigen Regalmagazinen.

Aus der EP 1 364 742 ist eine Handhabungseinrichtung für die Werkzeuge einer Werkzeugmaschine bekannt, bei welcher eine Vielzahl von Werkzeughaltern auf mehreren kreisförmigen Tragrahmen in einer Ebene stationär angeordnet sind. Ein Ausleger ist um eine senkrechte Schwenkachse verschwenkbar und trägt eine sich radial erstreckende Greiferanordnung. Mit dieser Greiferanordnung sind Werkzeuge zwischen einer Übergabestation und den Werkzeughaltern bewegbar. Diese bekannte Handhabungsvorrichtung eignet sich als Werkzeugmagazin und gleichzeitig auch zur Magazinplatzerweiterung und ermöglicht schnelle Werkzeugwechselvorgänge bei einfachem Bewegungsablauf. Dies wird dadurch ermöglicht, dass der Greifer zwei gegenüberliegende Öffnungen aufweist, wobei ein Werkzeug durch eine dieser Öffnungen in das Greiferinnere eingeführt und durch die andere diametral gegenüberliegende Öffnung aus dem Werkzeughalter seitlich herausgenommen werden kann.

Daneben ist in der US 5 919 120 ein Werkzeugwechselsystem beschrieben, das auf einem in der Horizontalebene verfahrbaren Schlitten montiert ist, welcher gleichzeitig als Werkzeugmagazin dient und unabhängig auf dem Werkstücktisch verfahren kann. Diese Handhabungseinrichtung ist für die sog. Leiterplatten-Bohrmaschinen konzipiert und zur Handhabung einer Vielzahl feinster nadelförmiger Bohrer ausgelegt. Zur Durchführung von Fräsarbeiten an verschiedenartigen Werkstükken und zur Handhabung von hierzu benötigten Fräswerkzeugen ist diese Einrichtung nicht geeignet.

Aufgabe der Erfindung ist es, eine Werkzeug-Handhabungseinrichtung für Werkzeugmaschinen zu schaffen, die einen universelleren Einsatz und eine Verkürzung der Werkzeug-Wechselzeiten ermöglicht.

Diese Aufgabe wird erfindungsgemäß durch die Merkmale des Anspruchs 1 gelöst. Bei der erfindungsgemäßen Werkzeug-Handhabungseinrichtung hat der Greifer zwei diametral gegenüberliegende Öffnungen zum seitlichen Ein- und Herausführen eines Werkzeughalters. Auf diese Weise kann ein Werkzeughalter, z.B. ein Werkzeugkegel, von der einen Seite durch dessen eine Öffnung in den Greifer eingeführt und zur Übergabe an ein weiteres Gerät, beispielsweise an einen Werkzeugwechsler oder auch an eine Arbeitsspindel, durch die Öffnung an der anderen Seite hindurch herausgeführt werden. Da während der Übergabe- und Transportvorgänge der jeweilige Werkzeughalter sicher im Greifer gehalten werden muß, sind erfindungsgemäß Betätigungselemente zum Verschwenken der beiden Greifklauen dieses Greifers vorgesehen, die bei einem Einführvorgang und auch bei einem Herausführvorgang eines Werkzeughalters durch eine der beiden Öffnungen die beiden Greifklauen vorzugsweise selbsttätig in ihre Schließstellung verschwenken.

Zweckmäßig ist jeder Greifklaue ein Betätigungselement zugeordnet, wobei die Betätigungselemente mindestens einen am Greifer vorgesehenen Treibanschlag enthalten können, der in die seitliche Bewegungsbahn des Werkzeughalters hineinragt und mit mindestens einer Greifklaue für deren Schwenkbewegung kinematisch gekoppelt ist. Auf diese Weise wird bei einer Einführbewegung eines Werkzeughalters in den Greifer sowie durch einen Gleitkontakt des Ringbundes am oberen Endteil des Werkzeughalters an dem Treibanschlag das Betätigungselement aktiviert und über dessen kinematische Kopplung die jeweilige Greifklaue verschwenkt. Entsprechendes gilt für das Herausführen eines Werkzeughalters aus dem Greifer, wobei auch in diesem Fall durch einen Gleitkontakt des vorgenannten Ringbundes an dem Treibanschlag das Betätigungselement aktiviert und ggf. zusammen mit der Greifklaue zur Freigabe des Werkzeughalters aufgeschwenkt wird. Das Ein- oder Aufschwenken der Greifklauen zum Erfassen oder Freigeben eines Werkzeughalters kann auch mittels Betätigungselementen erfolgen, die einen Antrieb, z.B. einen Druckmittelzylinder, und mindestens einen Sensor zum Erfassen eines Werkzeughalters während seines Ein- oder Herausführens sowie seiner Anwesenheit im Greifer aufweisen. Zur Steuerung solcher Druckmittelantriebe dient zweckmäßig die Maschinensteuerung.

Eine zuverlässige und auch bei hohen Trägheitskräften wirksame Sicherung der ggf. schwergewichtigen Werkzeuge im Greifer kann vorteilhaft durch einen Verriegelungsmechanismus gewährleistet werden, der einen Druckmittelzylinder mit je einem Zapfen zur Arretierung der jeweiligen Greifklaue in ihrer Schließstellung aufweist. Dabei ist es besonders zweckmäßig, wenn die Verriegelungseinrichtung zusätzliche Bauteile enthält, die eine Verdrehung des Werkzeughalters mit seinem ggf. schwergewichtigen Werkzeug auch während schneller Transportbewegungen verhindern. Bei einer zweckmäßigen Ausführung weist der Verriegelungsmechanismus zu diesem Zweck als Stifte ausgeführte Drehsicherungselemente auf, welche bei geschlossenem Greifer in die in üblichen Werkzeughaltern in deren oberstem Bund vorgesehene Ausnehmung eingreifen.

Gemäß einer zweckmäßigen Ausgestaltung der Erfindung weist die Greiferanordnung zwei diametral gegenüberliegende vertikal und symmetrisch zu ihrer Längsachse angeordnete Tragkörper auf, in denen die Greifklauen mit den Betätigungselementen verschwenkbar gelagert sind und der Verriegelungsmechanismus angeordnet ist. Diese zweckmäßigerweise durch eine obere Tragplatte fest miteinander verbundenen Tragkörper bilden einen in sich starren Gehäusekomplex mit einem ausreichend großen Innenraum zur Aufnahme der standardisierten Werkzeughalter. Zweckmäßig ist diese Gehäusebaugruppe der Greiferanordnung am freien Ende eines motorisch verschwenkbaren Tragarms montiert. Um während einer Schwenkbewegung dieses Tragarmes die Drehstellung des einmal ergriffenen Werkzeughalters beizubehalten, so daß dieser Werkzeughalter in der gleichen Winkelstellung einem Regalplatz entnommen und an einen Werkzeugwechsler übergeben werden kann, ist ein Ausgleichsgetriebe vorgesehen, das die Drehstellung des Greifers während der Schwenkbewegungen des Tragarms konstant, d.h. unverändert, hält.

Im folgenden wird ein bevorzugtes Ausführungsbeispiel der Erfindung anhand der Zeichnung im einzelnen beschrieben. Es zeigen:
- Fig. 1: eine Handhabungseinrichtung zusammen mit einem einreihigen Regalmagazin in perspektivischer Darstellung;
- Fig. 1A: die Handhabungseinrichtung des Systems nach Fig. 1 in vergrößerter perspektivischer Darstellung;
- Fig. 2: die Greiferanordnung der Handhabungseinrichtung nach Fig. 1 in perspektivischer schematischer Darstellung;
- Fig. 3: einen Greifer in Unteransicht mit geöffneten Greifklauen;
- Fig. 4: den Greifer nach Fig. 3 in Unteransicht mit geschlossenen Greifklauen.

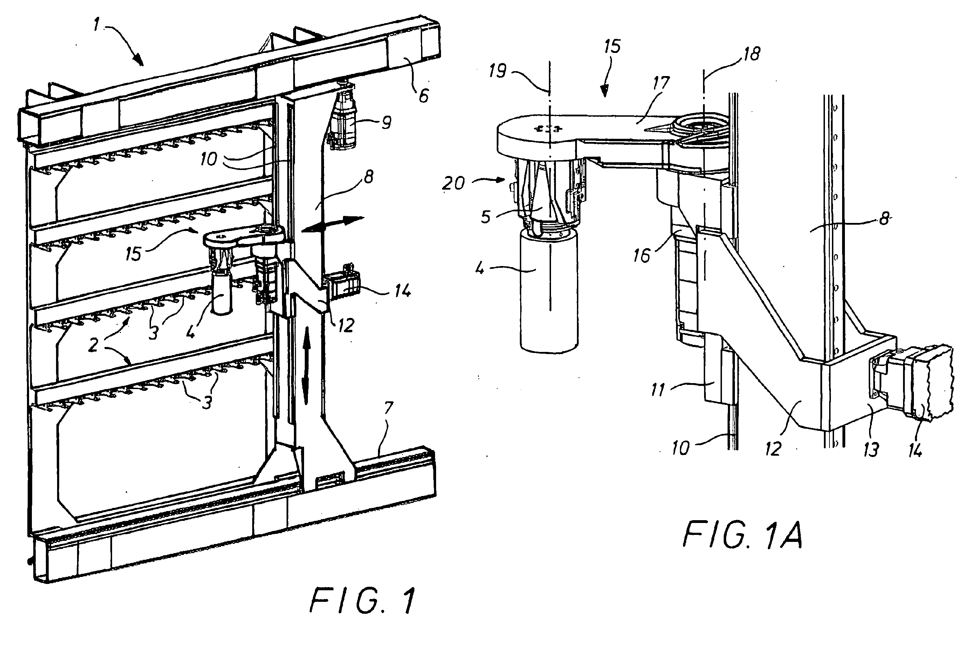

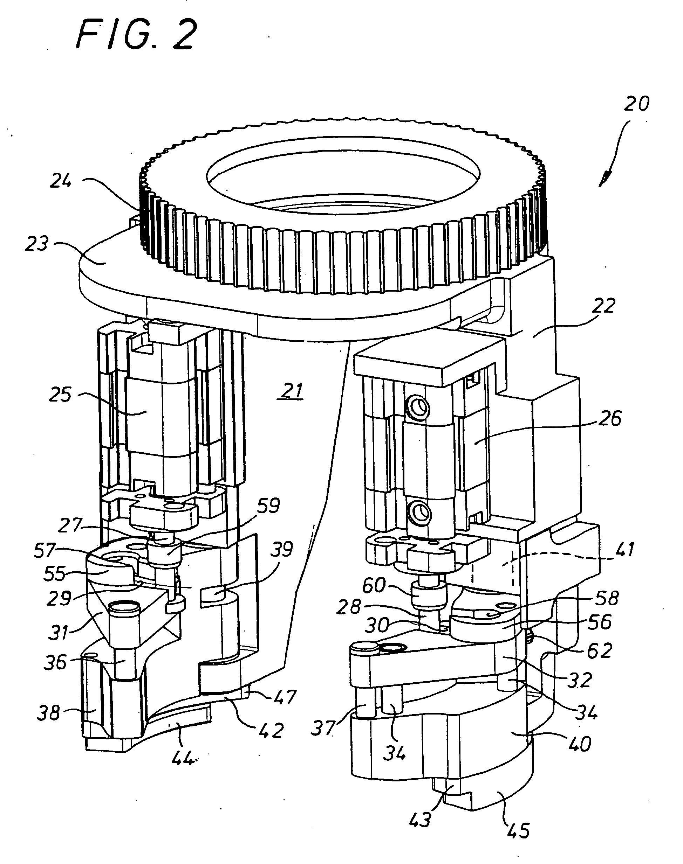

Das in Fig. 1 dargestellte System ist für den Einsatz bei Bearbeitungszentren sowie programmgesteuerten Bohr- und Fräsmaschinen konzipiert und besitzt ein Regalmagazin 1, das hier in vier horizontalen Regalen 2 jeweils eine Vielzahl von zur Stirnseite hin offenen halbrunden Aufnahmen 3 für die jeweils ein Werkzeug 4 enthaltenden Werkzeughalter 5 aufweist. Das Regal 1 ist in Rahmenkonstruktion ausgeführt und weist eine obere und eine untere formsteife Laufschiene 6, 7 auf. In diesen beiden Laufschienen 6, 7 ist ein Vertikalträger 8 in einer horizontalen Koordinatenachse entsprechend dem Doppelpfeil mittels eines Antriebsmotors 9 verfahrbar geführt. An der Stirnseite dieses Vertikalträgers 8 befinden sich zwei vertikale Führungsschienen 10, an denen ein Schlitten 11 geführt ist. Ein am Schlitten 11 montierter Tragrahmen 12 umgibt den Vertikalträger 8 und trägt an seiner Rückwand 13 einen Antriebsmotor 14 für die vertikalen Verfahrbewegungen in einer zweiten Koordinatenachse in Richtung des Doppelpfeils. An der Vorderseite des Schlittens 11 bzw. des Tragrahmens 12, die zusammen mit dem Vertikalträger 13 eine Tragkonstruktion bilden, ist eine Greiferanordnung 15 montiert, die in Fig. 1A im einzelnen dargestellt ist. Diese Greiferanordnung 15 enthält einen am Vertikalschlitten 11 achsparallel montierten Motor 16, der einen horizontalen Tragarm 17 um seine Mittelachse 18 verschwenkt. Am freien Ende des verschwenkbaren Tragarms 17 ist ein Greifer 20 um eine Vertikalachse 19 verdrehbar gelagert, der im folgenden anhand der Fig. 2 im einzelnen beschrieben wird.

Der dargestellte Greifer 20 enthält zwei diametral gegenüberliegende vertikal und achssymmetrisch angeordnete Tragkörper 21, 22, die durch eine obere Tragplatte 23 zu einer steifen und tragfähigen Baugruppe fest miteinander verbunden sind. Auf dieser Tragplatte 23 ist ein Zahnrad 24 befestigt, das von einem in Fig. 2 nicht dargestellten endlosen Keilriemen teilumschlungen wird, welcher innerhalb der Abdeckung des Tragarmes 17 verläuft und ein weiteres Zahnrad umschlingt, das in der Achse 18 am Ende des Tragarms montiert ist. Dieser Zahnriementrieb gewährleistet, daß bei einer Schwenkbewegung des Tragarms 17 die Winkelstellung des Greifers 20 und damit auch die winkelmäßige Ausrichtung des vom Greifer 20 erfaßten Werkzeughalters 5 (Werkzeugkegel) während aller Vorgänge konstant bleibt.

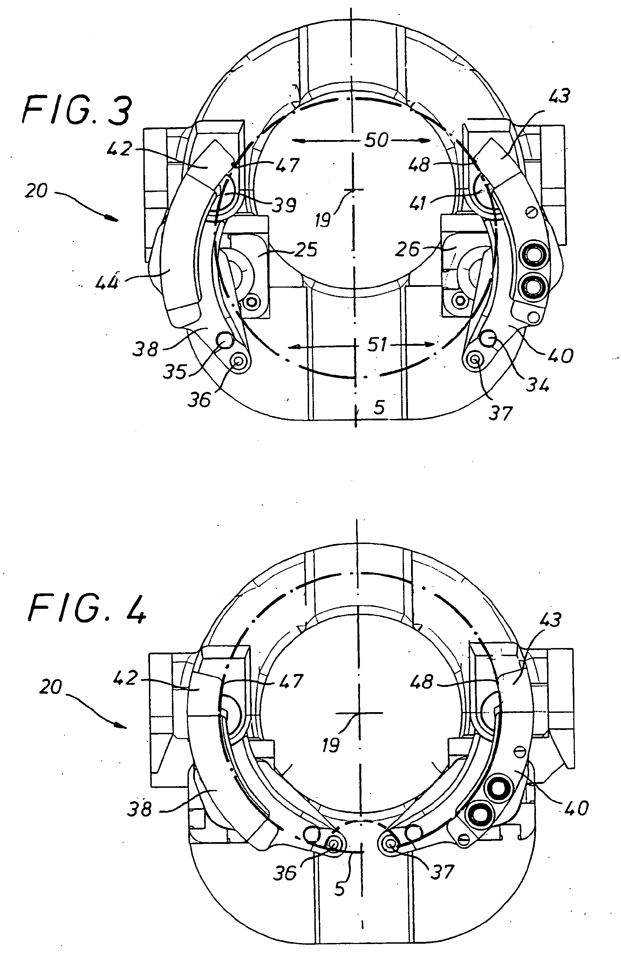

An jedem Tragkörper 21, 22 ist je eine Zylindereinheit 25, 26 fest montiert, die jeweils Teil eines Verriegelungsmechanismus ist. Die vertikal bewegliche Kolbenstange 27, 28 der jeweiligen Zylindereinheit 25, 26 greift mit einem endseitigen Kopf in je eine bogenförmige Nut 29, 30 ein, die in einer heb- und senkbaren Profilplatte 31, 32 ausgebildet ist. Jede Profilplatte 31, 32 ist an jeweils zwei am jeweiligen Tragkörper 21, 22 befestigten Zapfen 34, 35 gleitend geführt und weist an ihrem spitz zulaufenden Ende je einen Stift 36, 37 auf, der in die axiale Aussparung im Ringbund eines Werkzeugkegels axial eingreift und dadurch den Werkzeugkegel gegen Verdrehung im Greifer sichert (vgl. Fig. 4).

Die Profilplatten 31, 32 sind über die Gleitzapfen 34, 35 mit Greiferklauen 38, 40 drehfest verbunden, die um je einen vertikalen Drehzapfen 39, 41 verschwenkbar im Tragkörper 21, 22 gelagert sind. An ihrem unteren Endteil weist jede Greifklaue 38, 40 ein ringsegmentförmiges Fixierglied 44, 45 auf, das in geschlossenem Zustand in die Ringnut eines Werkzeugkegels eingreift. An diesen ringsegmentförmigen Fixiergliedern 44, 45 sind ebenfalls ringsegmentförmige Betätigungselemente 42, 43 einstückig angeformt, die an ihrem Endteil eine ballige bzw. bogenförmige Anschlagkante 47, 48 aufweisen.

Wie aus Fig. 3 ersichtlich, begrenzen die Greifklauen 38, 40 bzw. die an deren Unterseite befestigten kreissegmentförmigen Fixierglieder zwei diametral gegenüberliegende Öffnungen 50, 51, deren durch die Pfeile gekennzeichnete Weite größer als der Durchmesser eines in herkömmlicher Weise als Kegel ausgebildeten Werkzeughalters im Bereich seines breiteren Ringbund-Endteils ist. Beim Einführen eines Werkzeughalters durch die Öffnung 51 in den in Fig. 3 in seiner Offenstellung dargestellten Greifer 20 kommt der Ringbund am Ende des kegelförmigen Werkzeughalters 5 in der strichpunktiert dargestellten Position mit den balligen Flächen 47, 48 der beiden Betätigungselemente 42, 43 in Kontakt. Bei einer weitergehenden Einführbewegung des Werkzeughalters 5 in Pfeilrichtung in Fig. 3 werden die beiden Betätigungselemente 42, 43 zusammen mit ihren Greifklauen 38, 40 jeweils nach außen um die Drehzapfen 39, 41 verschwenkt. Durch diese Schwenkbewegung werden die in Fig. 3 unteren Teile der Greifklauen 38, 40 nach radial innen bewegt. Eine weitergehende Einführbewegung des Ringbundes des Werkzeughalters in die durch die Vertikalachse 19 definierte Greifstellung bewirkt ein weiteres Einschwenken der Greifklauen 38, 40 bis in die in Fig. 4 dargestellte Schließstellung. Ein entsprechender Effekt wird erzielt, wenn der Werkzeughalter durch die in Fig. 3 obere Öffnung 50 eingeführt wird, da auch in diesem Fall der Ringbund an seinem oberen kegelförmigen Ende in gleitende Druckanlage an die beiden bogenförmigen Flächen 47, 48 gelangt und dadurch die Betätigungselemente 42, 43 zusammen mit den Greifklauen 38, 40 um die Drehzapfen 39, 41 verschwenkt werden.

In der in Fig. 4 dargestellten Schließstellung sind die beiden Greifklauen 38, 40 gegen willkürliches Öffnen auf folgende Weise verriegelt. Wie aus Fig. 2 ersichtlich, befinden sich oberhalb der beiden Profilplatten 31, 32 jeweils ein weiteres Plattenelement 55, 56, das je einen sich in Verlängerung der Aufnahmeschlitze 29, 30 erstreckenden Ausschnitt 57, 58 mit kreisförmig erweitertem Endteil aufweist. Diese Plattenelemente 55, 56 machen die Schwenkbewegungen der Greifklauen 38, 40 mit, so daß bei deren Schließbewegung die Stangen 27, 28 der Zylindereinheiten 25, 26 bis in die kreisförmigen Endteile dieser Ausschnitte 57, 58 gelangen, und zwar in einen Druckkontakt mit je einem an der Kolbenstange 27, 28 vorgesehenen Ringbund 59, 60.

Durch Beaufschlagen der Zylindereinheiten 25, 26 mit Drucköl werden deren Kolbenstangen 27, 28 nach unten ausgefahren und die jeweilige Profilplatte 31, 32 wird durch den formschlüssigen Eingriff des verbreiterten Kolbenkopfes nach unten geschoben, was ein Ausfahren der Stifte 36, 37 bewirkt, die - wie in Fig. 4 angedeutet - in den am jeweiligen Ringbund des Werkzeughalters 5 vorgesehenen Ausschnitt eingreifen und auf diese Weise den Werkzeughalter gegen Verdrehung sichern.

Die Erfindung ist nicht auf das dargestellte Ausführungsbeispiel beschränkt. So können statt der mit Hilfe der Betätigungselemente 42, 45 und deren Bogenflächen 47, 48 erfolgten mechanischen Betätigung der Greifklauen 38, 40 auch andere geeignete Mittel eingesetzt werden. Möglich ist hier beispielsweise das Vorsehen eines oder mehrerer Sensoren, welche die Anwesenheit eines Werkzeughalters erfassen und Antriebselemente aktivieren, die ein Öffnen bzw. Schließen der Greifklauen herbeiführen. Zum Öffnen der Greifklauen 38, 40 und Freigeben eines Werkzeughalters 5 nach Entlasten der Zylindereinheiten 25, 26 können Federsysteme verwendet werden, wobei zu diesem Zweck in Fig. 2 eine Feder 62 angedeutet ist.

## Patentansprüche

1. Werkzeug-Handhabungseinrichtung einer programmgesteuerten Fräs- und Bohrmaschine mit
- einer in mindestens zwei Koordinatenachsen motorisch bewegbaren Tragkonstruktion (8, 11, 12), und
- einer an der Tragkonstruktion montierten Greiferanordnung (15), deren Greifer (20) zwei gegeneinander verschwenkbare Greifklauen (38, 40) sowie einen Verriegelungsmechanismus (57, 60) zum Arretieren der Greifklauen (38, 40) in ihrer Schließstellung aufweist,
wobei der Greifer (20) zwei diametral gegenüberliegende Öffnungen (50, 51) zum seitlichen Ein- und Herausführen eines Werkzeughalters (5) aufweist, und
wobei Betätigungselemente (42, 45) zum Verschwenken der beiden Greifklauen (38, 40) beim Ein- und Herausführen eines Werkzeughalters (5) durch eine der beiden Öffnungen (50, 51) vorgesehen sind.
**dadurch gekennzeichnet, daß**
- die Tragkonstruktion (8, 11, 12) einen in einer horizontalen Koordinatenachse motorisch verfahrbaren Vertikalträger (8) und einen am Vertikalträger (8) motorisch vertikal verfahrbaren Schlitten (11) aufweist,
- die Greiferanordnung (15) an dem Schlitten (11) montiert ist und einen motorisch verschwenkbaren Tragarm (17) aufweist, an dessen freiem Ende der Greifer (20) montiert ist, und
- als Betätigungselemente (42, 43) mindestens ein Treibanschlag (47, 48) vorgesehen ist, der in die seitliche Bewegungsbahn des Werkzeughalters (5) hineinragt und mit mindestens einer Greifklaue (38, 40) für deren Schwenkbewegung kinematisch gekoppelt ist.

2. Handhabungseinrichtung nach Anspruch 1,
**dadurch gekennzeichnet, daß**
jeder Greifklaue (38, 40) ein Betätigungselement (42, 45) zugeordnet ist.

3. Handhabungseinrichtung nach einem der vorstehenden Ansprüche,
**dadurch gekennzeichnet, daß**
das jeweilige Betätigungselement (42, 43) als bogenförmiges Segment an der zugehörigen Greifklaue (38, 40) ausgebildet ist, und an seinem einen Ende den Treibanschlag (47, 48) aufweist.

4. Handhabungseinrichtung nach Anspruch 1 oder 2,
**dadurch gekennzeichnet, daß**
dem Betätigungselement ein Antrieb und mindestens ein Sensor zum Erfassen eines Werkzeughalters zugeordnet sind.

5. Handhabungseinrichtung nach einem der vorstehenden Ansprüche,
**dadurch gekennzeichnet, daß**
der Verriegelungsmechanismus mindestens einen Druckmittelzylinder (25, 26) mit je einer vertikal ausfahrbaren Kolbenstange (27, 28) und einem daran ausgebildeten Ringbund (59, 60) aufweist.

6. Handhabungseinrichtung nach einem der vorstehenden Ansprüche,
**dadurch gekennzeichnet, daß**
der Verriegelungsmechanismus Drehsicherungselemente (36, 37) für den Werkzeughalter (5) aufweist.

7. Handhabungseinrichtung nach einem der vorstehenden Ansprüche,
**dadurch gekennzeichnet, daß**
der Greifer (20) zwei diametral gegenüberliegende vertikal und achssymmetrisch angeordnete Tragkörper (21, 22) aufweist, in denen die Greifklauen (38, 40) mit den Betätigungselementen (42, 45) verschwenkbar gelagert sind und der Verriegelungsmechanismus montiert ist.

8. Handhabungseinrichtung nach Anspruch 7,
**dadurch gekennzeichnet, daß**
die beiden Tragkörper (21, 22) durch eine obere Tragplatte (23) fest miteinander verbunden und der Greifer (20) um seine vertikale Mittelachse (19) verdrehbar ist.

9. Handhabungseinrichtung nach einem der vorstehenden Ansprüche,
**dadurch gekennzeichnet, daß**
der Greifer (20) am freien Ende eines motorisch verschwenkbaren Tragarms (17) montiert ist und ein Ausgleichsgetriebe (24) die Drehstellung des Greifers (20) während der Schwenkbewegungen des Tragarms (17) konstant hält.

10. Handhabungseinrichtung nach einem der vorstehenden Ansprüche,
**dadurch gekennzeichnet, daß**
die Greifklauen (38, 40) mittels der Betätigungselemente (42, 43) gegen die Kraft von Federelementen (60) in ihre Öffnungsstellung bewegbar sind und die Federelemente (60) die Greiferklauen (38, 40) in Schließrichtung beaufschlagen.

## Claims

1. Tool handling device of a program-controlled milling and drilling machine comprising
- a support construction (8, 11, 12) movable along at least two coordinate axes by means of a motor, and
- a gripper arrangement (15) mounted on the support construction the grippers (20) of which comprise two gripper claws (38, 40) pivotable against each other as well as a locking mechanism (57, 60) for locking the gripper claws (38, 40) in their closed posture,
- the gripper (20) comprising two diametrically opposed openings (50, 51) for a lateral insertion and extraction of a tool post (5), and
- operating elements (42, 45) being provided for pivoting the two gripper claws (38, 40) during the insertion and extraction of a tool post (5) through one of the two openings (50, 51),
**characterised in that**
- the support construction (8, 11, 12) comprises a vertical beam (8) shiftable along a horizontal coordinate axis by means of a motor and a slide (11) vertically shiftable on the vertical beam (8) by means of a motor,
- the gripper arrangement (15) is mounted on the slide (11) and comprises a support arm (17) pivotable by means of a motor, a gripper (20) being mounted on the free end of the support arm (17), and
- at least one drive stopper (47, 48) protruding into a lateral moving path of the tool post (5) and kinematically coupled with at least one gripper claw (38, 40) for its pivoting movement is provided as operating elements (42, 43).

2. Handling device according to claim 1,
**characterised in that**
an operating element (42, 45) is allocated to each gripper claw (38, 40).

3. Handling device according to one of the preceding claims,
**characterised in that**
the respective operating element (42, 43) is formed as an arcuate segment on the allocated gripper claw (38, 40) and has the drive stopper (47, 48) formed at its one end.

4. Handling device according to claim 1 or 2,
**characterised in that**
a drive and at least one sensor for detecting a tool post is allocated to the operating element.

5. Handling device according to one of the preceding claims,
**characterised in that**
the locking mechanism comprises at least one pressure cylinder (25, 26) respectively including a vertically extensible piston rod (27, 28) and a ring-shaped collar (59, 60) formed thereon.

6. Handling device according to one of the preceding claims,
**characterised in that**
the locking mechanism comprises elements (36, 37) for preventing a rotation of the tool post (5).

7. Handling device according to one of the preceding claims,
**characterised in that**
the gripper (20) comprises two diametrically opposed support bodies (21, 22) disposed vertically and axially symmetrical in which the gripper claws (38, 40) including the operating elements (42, 45) are pivotably supported and in which the locking mechanism is mounted.

8. Handling device according to claim 7,
**characterised in that**
the two support bodies (21, 22) are fixedly connected to each other by an upper support plate (23) and the gripper (20) is rotatable about its vertical centre axis (19).

9. Handling device according to one of the preceding claims,
**characterised in that**
the gripper (20) is mounted to the free end of a support arm (17) pivotable by means of a motor and differential gears (24) keep the rotational posture of the Gripper (20) constant during pivoting movements of the support arm (17).

10. Handling device according to one of the preceding claims,
**characterised in that**
the gripper claws (38, 40) can be moved into their open positions against the force of spring elements (60) by means of the operating elements (42, 43) and the spring elements (60) bias the gripper claws (38, 40) in the closing direction.

## Revendications

1. Système de manipulation d'outils pour une fraiseuse-aléseuse commandée par programme, comprenant
- une ossature porteuse (8, 11, 12) déplaçable à l'aide d'un moteur sur au moins deux axes de coordonnées, et
- un dispositif de préhension (15) monté sur l'ossature porteuse, dont le préhenseur (20) présente deux griffes de préhension (38, 40) pivotant l'une vers l'autre ainsi qu'un mécanisme de verrouillage (57, 60) pour le blocage des griffes de préhension (38, 40) dans leur position de fermeture,
le préhenseur (20) comportant deux ouvertures (50, 51) diamétralement opposées pour l'insertion et le retrait latéraux d'un porte-outil (5), et des éléments d'actionnement (42, 45) étant prévus pour le pivotement des deux griffes de préhension (38, 40) lors de l'insertion ou du retrait d'un porte-outil (5) par une des deux ouvertures (50, 51),
**caractérisé en ce que**
- l'ossature porteuse (8, 11, 12) comporte un support vertical (8) déplaçable à l'aide d'un moteur sur un axe de coordonnées horizontal et un chariot (11) verticalement déplaçable à l'aide d'un moteur sur le support vertical (8),
- le dispositif de préhension (15) est monté sur le chariot (11) et comporte un bras porteur (17) pivoté à l'aide d'un moteur à l'extrémité libre duquel le préhenseur (20) est monté, et
- **en ce qu'**au moins une butée d'entraînement (47, 48) est prévue comme élément d'actionnement (42, 43), coupant la trajectoire de déplacement latéral du porte-outil (5) et cinématiquement accouplée à au moins une griffe de préhension (38, 40) pour le pivotement de celle-ci.

2. Système de manipulation selon la revendication 1,
**caractérisé en ce qu'**
un élément d'actionnement (42, 45) est affecté à chaque griffe de préhension (38, 40).

3. Système de manipulation selon l'une des revendications précédentes,
**caractérisé en ce que**
chaque élément d'actionnement (42, 43) est réalisé comme segment en arc de cercle sur la griffe de préhension (38, 40) correspondante, et présente la butée d'entraînement (47, 48) sur sa première extrémité.

4. Système de manipulation selon la revendication 1 ou 2,
**caractérisé en ce qu'**
un entraînement et au moins un capteur pour la détection d'un porte-outil sont affectés à l'élément d'actionnement.

5. Système de manipulation selon l'une des revendications précédentes,
**caractérisé en ce que**
le mécanisme de verrouillage comporte au moins un vérin à fluide sous pression (25, 26) avec une tige de piston (27, 28) déplaçable verticalement et un épaulement annulaire (59, 60) formé sur celle-ci.

6. Système de manipulation selon l'une des revendications précédentes,
**caractérisé en ce que**
le mécanisme de verrouillage comporte des éléments de blocage de rotation (36, 37) pour le porte-outil (5).

7. Système de manipulation selon l'une des revendications précédentes,
**caractérisé en ce que**
le préhenseur (20) comporte deux corps de support (21, 22) diamétralement opposés, verticalement et axialement symétriques, où les griffes de préhension (38, 40) avec les éléments d'actionnement (42, 45) sont logées libres en pivotement, et où le mécanisme de verrouillage est monté.

8. Système de manipulation selon la revendication 7,
**caractérisé en ce que**
les deux corps de support (21, 22) sont fixement reliés par une plaque de support supérieure (23), et **en ce que** le préhenseur (20) est rotatif autour de son axe vertical central (19).

9. Système de manipulation selon l'une des revendications précédentes,
**caractérisé en ce que**
le préhenseur (20) est monté à l'extrémité libre d'un bras porteur (17) pivoté à l'aide d'un moteur, et **en ce qu'**un engrenage compensateur (24) maintient la position de rotation du préhenseur (20) constante pendant les pivotements du bras porteur (17).

10. Système de manipulation selon l'une des revendications précédentes,
**caractérisé en ce que**
les griffes de préhension (38, 40) sont déplaçables vers leur position d'ouverture au moyen des éléments d'actionnement (42, 43) contre la force d'éléments à ressort (60), et **en ce que** les éléments à ressort (60) rabattent les griffes de préhension (38, 40) en position de fermeture.
